# EUROPEAN PATENT APPLICATION

(11) **EP 3 048 688 A1**
(43) Date of publication of application: **27.07.2016**
(21) Application number: 15275024.6
(22) Date of filing: 22.01.2015
(51) Int. Cl.: H02J 3/36

(54) **Improvements in or relating to hvdc power converters**

(71) Applicant: General Electric Technology GmbH, 5400 Baden (CH)
(72) Inventor: EFIKA, Ikenna Bruce, Stafford ST16 3QE (GB); DAVIDSON, Colin Charnock, Stafford ST17 4PS (GB); STOTT, Timothy James, Stoke-on-Trent ST7 8JH (GB); MORENO MUNOZ, Francisco Jose, 31780 Bera (ES); VERSHININ, Konstantin, Stafford ST17 0PS (GB); CHIVITE-ZABALZA, Francisco Javier, Stafford, Staffordshire ST17 4XQ (GB); NICHOLLS, Jonathan Christopher, Derby DE1 3AJ (GB)
(74) Representative: Potter Clarkson LLP

(57) **Abstract**

In the field of HVDC power transmission there is provided a HVDC power converter (10; 70; 80; 100) that comprises a plurality of first switching elements (12) which are arranged to provide a first function within the power converter (10; 70; 80; 100). Each first switching element (12) has a first control unit (22) operatively connected therewith. Each first control unit (22) is programmed to effect switching of the corresponding first switching element (12) and thereby have the first switching elements (12) provide the first function. The plurality of first control units (22) are arranged in communication via a first communication network (44) with a higher level control unit (46) that is configured to provide each of the first control units (22) with switching instructions for the corresponding first switching element (12). The HVDC power converter (10; 70; 80; 100) also comprises a plurality of second switching elements (50) that are arranged to provide a second function within the power converter (10; 70; 80; 100). Each second switching element (50) has a second control unit (52) operatively connected therewith. Each second control unit (52) is programmed to effect switching of the corresponding second switching element (50) and thereby have the second switching elements (50) provide the second function. The plurality of second control units (52) are interconnected with one another via a second communication network (56).

## Description

This invention relates to a high voltage direct current (HVDC) power converter.

In HVDC power transmission, alternating current (AC) electrical power is converted to high voltage direct current (DC) power for transmission via overhead lines and/or undersea cables. This conversion reduces the cost per kilometre of the lines and/or cables, and is therefore cost-effective when power needs to be transmitted over a long distance. Once the transmitted electrical power reaches its target destination, the high voltage DC electrical power is converted back to AC electrical power before being distributed to local networks.

The conversion of AC power to DC power is also commonly utilized in power transmission networks in circumstances where it is necessary to interconnect two AC networks operating at different frequencies.

HVDC power converters are required at each interface between AC and DC networks to effect the required conversion between AC power and DC power.

According to an aspect of the invention there is provided a HVDC power converter comprising:
a plurality of first switching elements arranged to provide a first function within the power converter, each first switching element having a first control unit operatively connected therewith, each first control unit being programmed to effect switching of the corresponding first switching element and thereby have the first switching elements provide the first function, and the plurality of first control units being arranged in communication via a first communication network with a higher level control unit configured to provide each of the first control units with switching instructions for the corresponding first switching element; and
a plurality of second switching elements arranged to provide a second function within the power converter, each second switching element having a second control unit operatively connected therewith, each second control unit being programmed to effect switching of the corresponding second switching element and thereby have the second switching elements provide the second function, and the plurality of second control units being interconnected with one another via a second communication network.

The inclusion of separate first and second communication networks operatively associated with different groups of switching elements, i.e. respective first switching elements and respective second switching elements, allows the communication networks to have different performance characteristics, and more particularly for the second communication network to provide faster communication between the various second control units, i.e. to have lower communication latency.

This faster communication is particularly beneficial since it permits, for example, the rapid exchange of information between the second switching elements, as well as the interruption and instant exchange of high priority information, and so provides for seamless coordination in the operation of the second switching elements. Such seamless coordination is, in turn, advantageous in circumstances when the second switching elements must be operated extremely quickly within a short period of time, e.g. in less than 100µs.

The first communication network may be or include a point to multipoint network.

A point to multipoint network establishes a desirable degree of communication, at an acceptable speed, between the higher level control unit and each first control unit in a manner that is readily compatible with conventional HVDC power converter topologies.

Preferably the second communication network includes at least one closed network loop.

Such an arrangement helps to further reduce communication latency and so increase communication speeds between the second control units, while at the same time accommodating a wide range of differing numbers of second control units within different power converter arrangements.

Optionally the first communication network includes at least one closed network loop.

Configuring the first communication network in such a manner helps to increase communication speeds within the first communication network which can be desirable in certain control situations.

In a preferred embodiment of the invention at least one of the first and second communication networks includes at least one pair of dual coterminous closed network loops.

In another preferred embodiment of the invention each of the control units in at least one closed network loop is dynamically configurable as a master control unit or a slave control unit.

The foregoing features provide a degree of redundancy within the associated communication network which mitigates the impact of a failure of a control unit and/or communication link in one of the associated closed network loops.

Optionally within at least one closed network loop the first control unit to transmit information assumes control of the said closed network loop.

Such an arrangement helps to avoid data collision within the or each said closed network loop.

The second communication network may be further arranged in communication with the higher level control unit.

Having the second communication network so configured permits the feedback of information from one or more of the second switching elements to the higher level control unit, as well as the selective intervention of the higher level control unit in the operation of one or more second switching elements.

In a still further preferred embodiment of the invention the plurality of first switching elements interconnect a DC side of the power converter with an AC side of the power converter and each first control unit effects switching of the corresponding first switching element to selectively permit the flow of current between the DC side and the AC side and thereby have the first switching elements provide the first function in the form of transferring power between the DC side and the AC side, and
each of the second switching elements is electrically connected between first and second connection terminals of a corresponding first switching element and each second control unit effects switching of the corresponding second switching element to selectively create an alternative current path between the first and second connection terminals associated therewith and thereby have the second switching elements provide the second function in the form of diverting current to flow through the respective alternative current paths.

Such an arrangement desirably brings the differing performance characteristics of the first and second communication networks, and more particularly the faster communication within the second communication network, to HVDC power converters in the form of, e.g. Line Commutated Converters, and so permits the optimisation of the diverting current functionality of the second switching elements to similarly optimise the manner in which such functionality compensates for variations in the turn-off performance characteristics of the plurality of first switching elements in such converters.

Preferably the plurality of first switching elements are arranged within respective voltage source modules in a chain-link converter and each first control unit effects switching of the first switching elements in a respective corresponding voltage source module to selectively cause each said voltage source module to provide a voltage source and thereby have the first switching elements provide the first function in the form of a voltage waveform generated by the associated chain-link converter, and
each of the second switching elements is arranged in a respective first or second limb portion of a converter limb within the power converter and the second control units effect switching of the or each corresponding second switching element in a respective first or second limb portion to thereby have the second switching elements provide the second function in the form of selectively switching a corresponding chain-link converter in and out of circuit within the said respective first or second limb portion.

An arrangement of this type desirably brings the differing performance characteristics of the first and second communication networks, and more particularly the faster communication within the second communication network, to HVDC power converters in the form of, e.g. so-called Alternate Arm Converters, and so permits desirable control of the switching of the first switching elements in each chain-link converter as well as the fast communication of protection and monitoring information regarding the second switching elements to help ensure their reliable and optimal operation.

Optionally the plurality of first switching elements are arranged within respective voltage source modules in a chain-link converter and each first control unit effects switching of the first switching elements in a respective corresponding voltage source module to selectively cause each said voltage source module to provide a voltage source and thereby have the first switching elements provide the first function in the form of a voltage waveform generated by the chain-link converter to modify the DC voltage at a DC side of the power converter, and
the second switching elements are arranged in two pairs of series connected second switching elements connected in parallel in a full-bridge arrangement which interconnects the DC side of the power converter with an AC side of the power converter, and each second control unit effects switching of the corresponding second switching element to selectively permit the flow of current between the DC side and the AC side and thereby have the second switching elements provide the second function in the form of transferring power between the DC side and the AC side.

Configuring the power converter in such a manner desirably brings the differing performance characteristics of the first and second communication networks, and more particularly the faster communication within the second communication network, to HVDC power converters in the form of, e.g. so-called Series Bridge Converters, and so permits desirable control of the switching of the first switching elements in the chain-link converter as well as the fast communication of protection and monitoring information regarding the second switching elements to help ensure their reliable and optimal operation.

There now follows a brief description of preferred embodiments of the invention, by way of non-limiting example, with reference to the following drawings in which:
Figure 1 shows a schematic view of a power converter according to a first embodiment of the invention;
Figure 2 shows a schematic view of an enlarged portion of a power converter according to a second embodiment of the invention;
Figure 3 shows a schematic view of a power converter according to a third embodiment of the invention; and
Figure 4 shows a schematic view of a power converter according to a fourth embodiment of the invention.

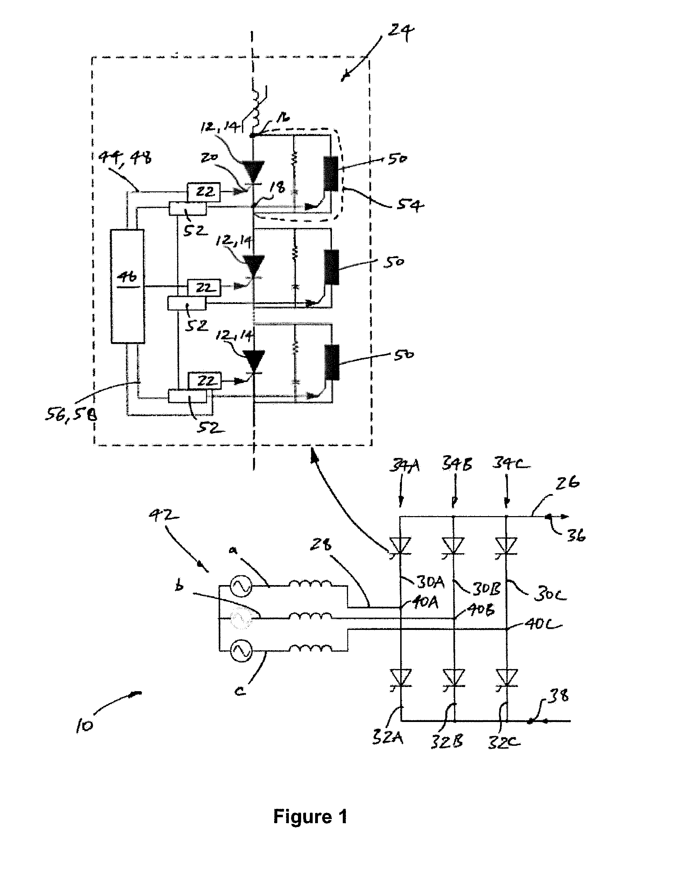

A HVDC power converter according to a first embodiment of the invention is designated generally be reference numeral 10, as shown in Figure 1.

The first power converter 10 includes a plurality of first switching elements 12 that are arranged to provide a first function within the power converter 10.

In the embodiment shown, each of the first switching elements 12 is a thyristor 14, although in other embodiments of the invention a different semiconductor switching element may be used such as a diode, Light-Triggered Thyristor (LTT), Gate Turn-Off thyristor (GTO), Gate Commutated Thyristor (GCT) or an Integrated Gate Commutated Thyristor (IGCT). Preferably, in the first embodiment, the first switching element 12 is optimised for lowest conduction (on-state) losses at the expense of other parameters such a turn-on and turn-off characteristics and off-state voltage profile. Each thyristor 14 includes an anode which defines a first connection terminal 16, a cathode which defines a second connection terminal 18, and a gate that defines a control terminal 20 via which the thyristor 14 may be switched on.

In this regard each first switching element 12, i.e. each thyristor 14, has a first control unit 22 operatively connected therewith. Each first control unit 22 may take the form of a field-programmable gate array (FPGA), or other embedded solution, that is in any event programmed to effect switching of the corresponding first switching element 12 and thereby have the first switching elements 12 provide the aforementioned first function.

As shown in Figure 1, respective series-connected strings 24 of first switching elements 12 interconnect a DC side 26 of the first power converter 10 with an AC side 28 of the power converter 10, and more particularly are arranged in respective first and second limb portions 30A, 32A, 30B, 32B, 30C, 32C of the power converter 10. These first and second limb portions 30A, 32A, 30B, 32B, 30C, 32C lie within corresponding converter limbs 34A, 34B, 34C that extend between first and second DC terminals 36, 38 on the DC side 26 of the power converter 10 and are bisected by a respective corresponding AC terminal 40A, 40B, 40C on the AC side 28 of the power converter 10. In this manner the first power converter 10 adopts a so-called Line Commutated Converter (LCC) configuration.

The power converter 10 shown in Figure 1 is a three-phase converter which handles respective first, second and third phases, a, b, c of a corresponding three-phase AC network 42. The power converter of the invention may however be configured to handle fewer than or more than three phases and hence have a fewer or greater number of corresponding converter limbs 34.

Each first control unit 22 effects switching of the corresponding first switching element 12 to selectively permit the flow of current between the DC side 26 and the AC side 28 of the power converter 10, i.e. via a respective first limb portion 30A, 30B, 30C and cooperating second limb portion 32A, 32B, 32C, and thereby have the first switching elements 12 provide the first function in the form of transferring power between the DC side 26 and AC side 28.

The plurality of first control units 22 are arranged in communication, via a first communication network 44, with a higher level control unit 46 which is configured to provide each of the first control units 22 with switching instructions for the corresponding first switching element 12, i.e. corresponding thyristor 14.

In the first embodiment shown the first communication network 44 is a point to multipoint network 48. The point to multipoint network 48 may be formed using passive optical splitters so as to define a passive optical network, or using active optical splitters so as to define an active optical network. In each such case information, such as e.g. thyristor firing, i.e. switching signals, or data-back from the thyristors 14, may be exchanged in either direction, i.e. from the higher level control unit 46 to each first control unit 22 and vice versa. Such a first communication network 44 may also enable information exchange between the first control units 22, i.e. between the first switching elements 12.

In addition to the foregoing, the first power converter 10 also includes a plurality of second switching elements 50 that are arranged to provide a second function within the first power converter 10.

More particularly, each of the second switching elements 50 is electrically connected between the first and second connection terminals 16, 18 of a corresponding first switching element 12, i.e. a corresponding thyristor 14. Each second switching element 50 preferably includes a transistor and a current limiting element in the form of a resistor (none of which are shown in Figure 1). The transistor may be a metal-oxide-semiconductor field effect transistor (MOSFET), although many other transistors may also be used such as, for example, a bipolar junction transistor (BJT), an insulated gate bipolar transistor (IGBT), or a junction gate field-effect transistor (JFET). A transistor assembly, such as a MOSFET-JFET cascode circuit incorporating a super-cascode arrangement of 50V MOSFETs and a series string of 1200V SiC JFETs, or a direct series connection of low voltage MOSFETs or IGBTs, may also be used.

Each second switching element 50 has a second control unit 52 operatively connected therewith. Each second control unit 52 may similarly take the form of a field-programmable gate array (FPGA), or other embedded solution. In addition, although shown in Figure 1 as discrete units, the respective first and second control units 22, 52 associated with a particular first switching element 12 and corresponding second switching element 50 may reside within the same control module (not shown), with their respective control function being implemented separately by way of different software code elements.

In any event, each second control unit 52 is programmed to effect switching of the corresponding second switching element 50 and thereby have the second switching elements 50 provide the aforementioned second function.

In the first embodiment shown, each second control unit 52 effects switching of the corresponding second switching element 50 to selectively create an alternative current path 54 (only one of which is shown in Figure 1) between the first and second connection terminals 16, 18 of the first switching element 12, i.e. thyristor 14, with which it is associated. The second switching elements 50 are thereby able to provide the second function in the form of diverting current to flow through the respective alternative current paths 54.

The plurality of second control units 52 are interconnected with one another via a second communication network 56. As shown in Figure 1 the second communication network 56 includes a single closed network loop 58, although in other embodiments of the invention the second communication network may include a plurality of closed network loops that are interconnected with one another.

In addition, as also shown in Figure 1, the second communication network 56 is arranged in communication with the higher level control unit 46, although this need not necessarily be the case.

The second communication network 56 may employ fieldbus technologies such as EtherCAT and Time Division Multiplexing (TDM) Bus, while cabling used to create a physical communication link between respective second control units 52 may be based on Optical Ethernet which has a transmission speed of up to 1 Gbps. As a consequence latency levels in the order of 100ns and below can be achieved in the second communication network 56.

In use the first communication network 44 handles the transmission from the higher level control unit 46 of switching instructions, i.e. firing words, to each first switching element 12, i.e. each thyristor 14, and the transmission in return of data back from each first switching element 12 to the higher level control unit 46.

Meanwhile, the faster second communication network 56 handles only the exchange of information, such as thyristor voltage level data and monitoring data, between respective second switching elements 50. This, together with a processing capability of each second control unit 52, permits the exchange of relevant information between adjacent first switching elements "on the fly", i.e. in real-time, which in turn allows the interruption and instant exchange of high priority information, such as voltage/current threshold triggers for each thyristor 14. Such functionality permits operation of the second switching elements 50 and the alternative current paths 54 they provide in complex and highly targeted modes which are able to compensate extremely well for the variation in performance characteristics of the first switching elements 12, i.e. the thyristors 14.

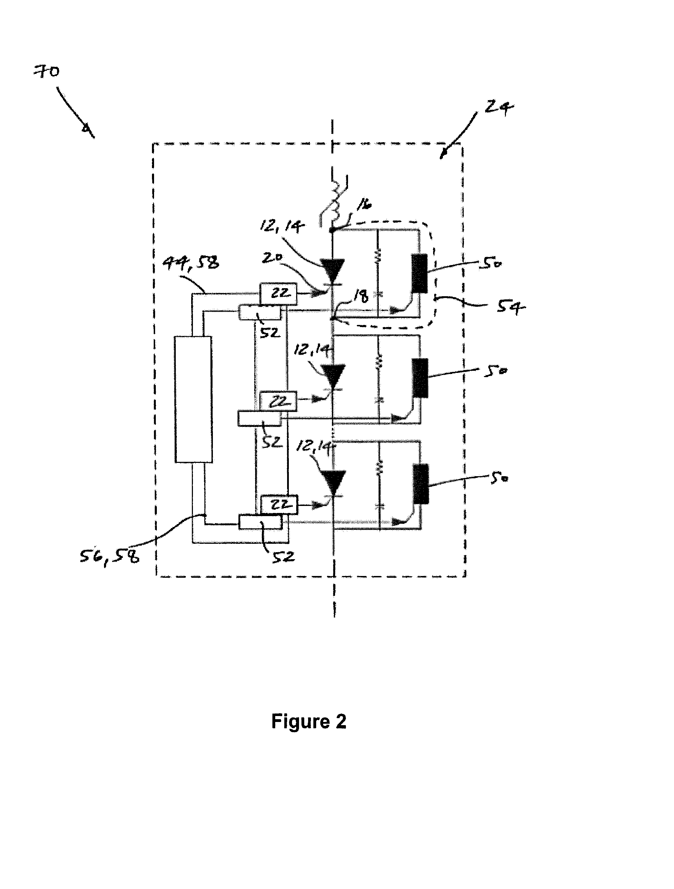

A portion of a HVDC power converter 70 according to second embodiment of the invention is shown in Figure 2. The portion of second power converter 70 shown in Figure 2 again forms a part of a power converter that adopts a so-called Line Commutated Converter (LCC) configuration.

As a result the second power converter 70 is very similar to the first power converter 10 and like features share the same reference numerals. The second power converter 70 does however differ from the first power converter 10 in that the first communication network 44 includes a single closed network loop 58, rather than a point to multipoint network as in the first power converter 10. In still further embodiments of the invention the first communication network 44 may include a plurality of closed network loops that are interconnected with one another.

In use the inclusion of a closed network loop 58 in the first communication network 44 permits faster communication within the first communication network 44 which is desirable under certain control conditions.

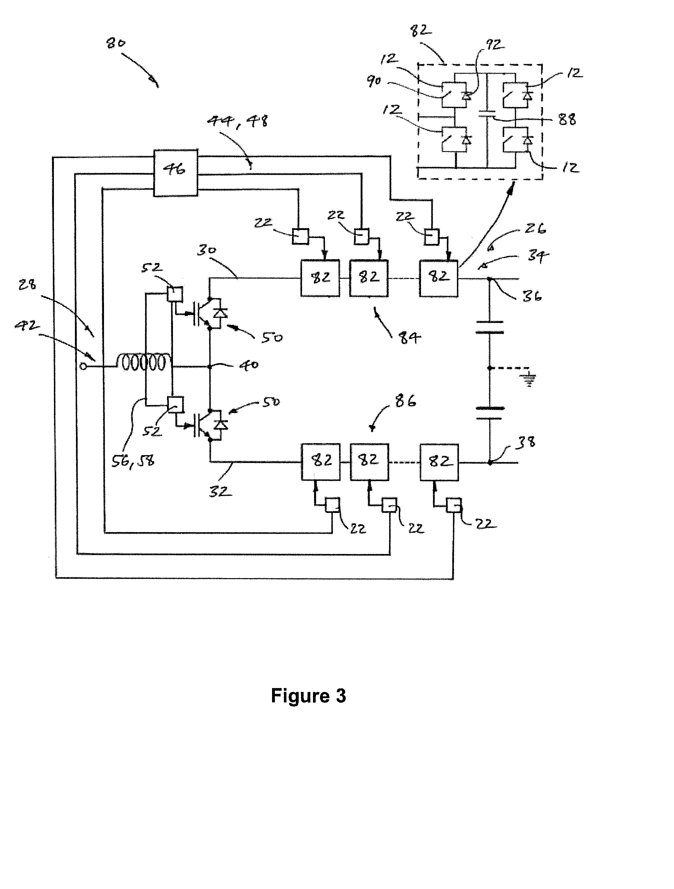

A HVDC power converter 80 according to third embodiment of the invention is shown in Figure 3.

The third power converter 80 shares some features with the first and second power converters 10; 70 and these common features are designated using the same reference numerals.

In the third power converter 80, as shown in Figure 3, the plurality of first switching elements 12 are arranged within respective series-connected voltage source modules 82 in a chain-link converter, and more particularly in respective first and second chain-link converters 84, 86.

In the embodiment shown the first switching elements 12 within each voltage source module 82 take the form of an insulated gate bipolar transistor (IGBT) 90 accompanied by a reverse-parallel connected diode 92. In other embodiments the first switching elements 12 may instead take the form of a different semiconductor switch, such as a Gate Turn-Off thyristor (GTO) or an Integrated Gate-Commutated Thyristor (IGCT), accompanied by a reverse-parallel connected diode.

In any event, the first switching elements 12 are arranged in two pairs that are connected in parallel with an energy storage device in the form of a capacitor 88 (although other forms of energy storage device are also possible) in a full-bridge arrangement to form a 4-quadrant bipolar voltage source module 82 that can provide positive, zero or negative voltage, and can conduct current in both directions.

Each associated first control unit 22 effects switching of the first switching elements 12 in a respective corresponding voltage source module 82 to provide a voltage source, and thereby have the first switching elements 12 provide a first function in the form of a voltage waveform generated by the associated chain-link converter 84, 86.

The first control units 22 are again arranged in communication with a higher level control unit 46 via a first communication network 44 which includes a point to multipoint network 48.

Meanwhile, in the third power converter 80, each of the second switching elements 50 is arranged in a respective first or second limb portion 30, 32 of a converter limb 34.

Each second control unit 52 corresponding to a given second switching element 50 effects switching of the or each said second switching element 50 in a respective first or second limb portion 30, 32 to thereby have the second switching elements 50 provide a second function in the form of selectively switching a corresponding chain-link converter 84, 86 in and out of circuit within the said respective first or second limb portion 30, 32.

The second control units are interconnected with one another via a second communication network 56 which includes a single closed network loop 58.

In use the first communication network 44 handles the transmission from the higher level control unit 46 of switching instructions, i.e. firing words, to each first switching element 12, i.e. each IGBT 90, and the transmission in return of data back from each first switching element 12 to the higher level control unit 46.

Meanwhile, the faster second communication network 56 handles only the exchange of information, such as protection and monitoring data, between respective second switching elements 50 which facilitates their reliable and optimal operation.

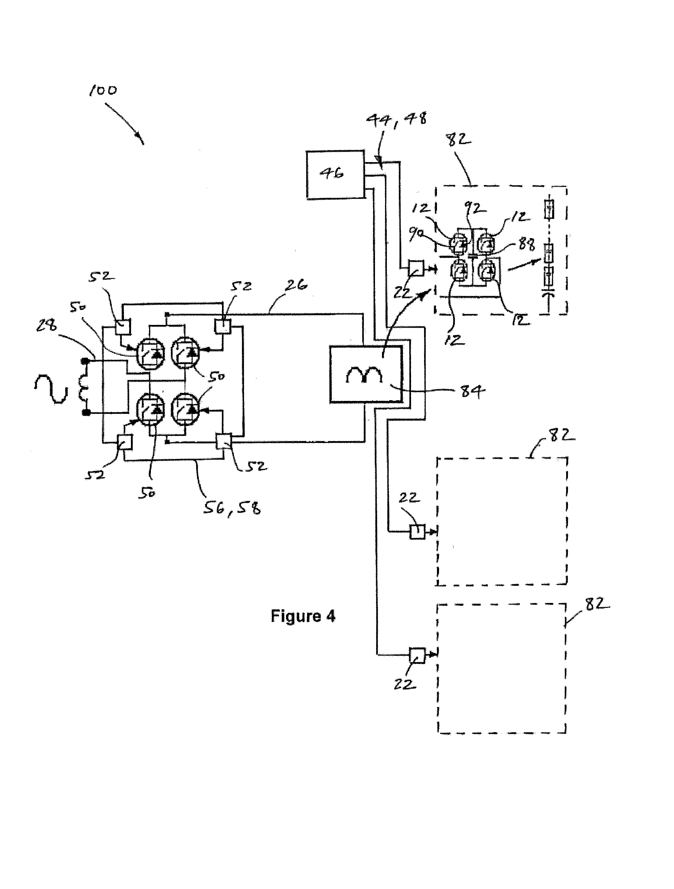

A HVDC power converter 100 according to fourth embodiment of the invention is shown in Figure 4.

The fourth power converter 100 shares some features with the first, second and third power converters 10; 70; 80 and these common features are designated using the same reference numerals.

In the fourth power converter 100, as shown in Figure 4, the plurality of first switching elements 12 are again arranged within respective series-connected voltage source modules 82 in a chain-link converter 84.

In the embodiment shown the first switching elements 12 within each voltage source module 82 take the form of an insulated gate bipolar transistor (IGBT) 90 accompanied by a reverse-parallel connected diode 92. In other embodiments the first switching elements 12 may instead take the form of a different semiconductor switch, such as a Gate Turn-Off thyristor (GTO) or an Integrated Gate-Commutated Thyristor (IGCT), accompanied by a reverse-parallel connected diode.

In any event, the first switching elements 12 are arranged in two pairs that are connected in parallel with an energy storage device in the form of a capacitor 88 (although other forms of energy storage device are also possible) in a full-bridge arrangement to form a 4-quadrant bipolar voltage source module 82 that can provide positive, zero or negative voltage, and can conduct current in both directions.

In other embodiments of the invention (not shown) the first switching elements 12 may instead be arranged as a single pair connected in parallel with an energy storage device, e.g. a capacitor, in a half-bridge arrangement to form a 2-quadrant unipolar voltage source module that can provide positive or zero voltage, and can conduct current in both directions.

In either case, each associated first control unit 22 effects switching of the first switching elements 12 in a respective corresponding voltage source module 82 to provide a voltage source, and thereby have the first switching elements 12 provide a first function in the form of a voltage waveform generated by the chain-link converter 84 to modify the DC voltage at a DC side 26 of the fourth power converter 100.

The first control units 22 are again arranged in communication with a higher level control unit 46 via a first communication network 44 which includes a point to multipoint network 48.

Meanwhile, in the fourth power converter 80, the second switching elements 50 are arranged in two pairs of series-connected second switching elements 50 that are connected in parallel in a full-bridge arrangement which interconnects the DC side of the fourth power converter 100 with an AC side of the fourth power converter 100.

Each second control unit 52 effects switching of the corresponding second switching element 50 to selectively permit the flow of current between the DC side and the AC side and thereby have the second switching elements 50 provide a second function in the form of transferring power between the DC side and the AC side.

The second control units are interconnected with one another via a second communication network 56 which includes a single closed network loop 58.

In use the first communication network 44 handles the transmission from the higher level control unit 46 of switching instructions, i.e. firing words, to each first switching element 12 and the transmission in return of data back from each first switching element 12 to the higher level control unit 46.

Meanwhile, the faster second communication network 56 handles only the exchange of information, such as protection and monitoring data, between respective second switching elements 50 which facilitates their reliable and optimal operation.

In any of the first, second, third or fourth power converters 10; 70; 80; 100 described above, a corresponding one or both of the first and second communication networks 44, 56 may include one or more pairs of dual, coterminous, closed network loops (not shown), i.e. dual communication rings which interconnect the same control units 22, 52. In such arrangements an extra communication node is required on one of the control units 22, 52 but since the communication link between respective control units 22, 52 in each loop is full-duplex, i.e. allows communication in both directions, the arrangement is able to mitigate against failure within one of the said communication links.

In addition, in any of the first, second, third or fourth power converters 10; 70; 80; 100, each of the control units 22, 52 in at least one given closed network loop 58 may be dynamically configurable as a master control unit or a slave control unit. Such functionality similarly helps to mitigate against failure within a communication link and/or in a respective control unit 22, 52.

Furthermore, within at least one closed network loop 58 of the first, second, third and/or fourth power converters 10; 70; 80; 100, the first control unit 22, 52 to transmit information may assume control of the said closed network loop 58. Such a controlling control unit 22, 52 may also be configured to give priority to other control units 22, 52 which transmit information identified as being urgent, e.g. by way of a priority header in an associated data packet.

In this regard, data formats such as Ethernet 802.3 or some other proprietary format may be employed for packing the information for transmission in one or both of the first and second communication networks 44, 56 of any of the first, second, third or fourth power converters 10; 70; 80; 100. In addition, data mapping may be optimised as required to further reduce latency and data transmission times.

## Claims

1. A HVDC power converter comprising:
a plurality of first switching elements arranged to provide a first function within the power converter, each first switching element having a first control unit operatively connected therewith, each first control unit being programmed to effect switching of the corresponding first switching element and thereby have the first switching elements provide the first function, and the plurality of first control units being arranged in communication via a first communication network with a higher level control unit configured to provide each of the first control units with switching instructions for the corresponding first switching element; and
a plurality of second switching elements arranged to provide a second function within the power converter, each second switching element having a second control unit operatively connected therewith, each second control unit being programmed to effect switching of the corresponding second switching element and thereby have the second switching elements provide the second function, and the plurality of second control units being interconnected with one another via a second communication network.

2. A HVDC power converter according to Claim 1 wherein the first communication network is or includes a point to multipoint network.

3. A HVDC power converter according to Claim 1 or Claim 2 wherein the second communication network includes at least one closed network loop.

4. A HVDC power converter according to Claim 1 or Claim 3 wherein the first communication network includes at least one closed network loop.

5. A HVDC power converter according to Claim 3 or Claim 4 wherein at least one of the first and second communication networks includes at least one pair of dual coterminous closed network loops.

6. A HVDC power converter according to any of Claims 3 to 5 wherein each of the control units in at least one closed network loop is dynamically configurable as a master control unit or a slave control unit.

7. A HVDC power converter according to any of Claims 3 to 6 wherein within at least one closed network loop the first control unit to transmit information assumes control of the said closed network loop.

8. A HVDC power converter according to any preceding claim wherein the second communication network is further arranged in communication with the higher level control unit.

9. A HVDC power converter according to any preceding claim wherein:
the plurality of first switching elements interconnect a DC side of the power converter with an AC side of the power converter and each first control unit effects switching of the corresponding first switching element to selectively permit the flow of current between the DC side and the AC side and thereby have the first switching elements provide the first function in the form of transferring power between the DC side and the AC side, and
each of the second switching elements is electrically connected between first and second connection terminals of a corresponding first switching element and each second control unit effects switching of the corresponding second switching element to selectively create an alternative current path between the first and second connection terminals associated therewith and thereby have the second switching elements provide the second function in the form of diverting current to flow through the respective alternative current paths.

10. A HVDC power converter according to any of Claims 1 to 8 wherein:
the plurality of first switching elements are arranged within respective voltage source modules in a chain-link converter and each first control unit effects switching of the first switching elements in a respective corresponding voltage source module to selectively cause each said voltage source module to provide a voltage source and thereby have the first switching elements provide the first function in the form of a voltage waveform generated by the associated chain-link converter, and
each of the second switching elements is arranged in a respective first or second limb portion of a converter limb within the power converter and the second control units effect switching of the or each corresponding second switching element in a respective first or second limb portion to thereby have the second switching elements provide the second function in the form of selectively switching a corresponding chain-link converter in and out of circuit within the said respective first or second limb portion.

11. A HVDC power converter according to any of Claims 1 to 8 wherein:
the plurality of first switching elements are arranged within respective voltage source modules in a chain-link converter and each first control unit effects switching of the first switching elements in a respective corresponding voltage source module to selectively cause each said voltage source module to provide a voltage source and thereby have the first switching elements provide the first function in the form of a voltage waveform generated by the chain-link converter to modify the DC voltage at a DC side of the power converter, and
the second switching elements are arranged in two pairs of series connected second switching elements connected in parallel in a full-bridge arrangement which interconnects the DC side of the power converter with an AC side of the power converter, and each second control unit effects switching of the corresponding second switching element to selectively permit the flow of current between the DC side and the AC side and thereby have the second switching elements provide the second function in the form of transferring power between the DC side and the AC side.
